# EUROPEAN PATENT SPECIFICATION

(11) **EP 1 690 444 B1**
(45) Date of publication and mention of the grant of the patent: **28.07.2010**
(21) Application number: 05257156.9
(22) Date of filing: 21.11.2005
(51) Int. Cl.: A01D 43/063

(54) **Lawnmower**
Rasenmäher
Tondeuse à gazon

(30) Priority: 15.02.2005 GB 0503176
(43) Date of publication of application: 16.08.2006
(73) Proprietor: Husqvarna UK Limited, County Durham, DL5 6UP (GB)
(72) Inventor: Whittaker, Colin, County Durham, DL14 OSU (GB)
(74) Representative: Finkele, Rolf

(56) References cited:
- EP-A- 1 543 711
- DE-A1- 2 743 115
- US-A- 4 217 747
- US-A- 4 250 698
- US-A- 4 265 079
- US-A- 5 619 845

## Description

The invention relates to a lawnmower.

A known lawnmower comprises a handle connected to a shell (or deck) in which a rotatable cutting blade is arranged, the cutting blade being rotatable about an upright axis, and being driven by a motor on top of the deck. The lawnmower has ground-engaging wheels at each end of the deck. The handle is U-shaped and each of its ends is attached to the deck. The handle includes a respective joint part-way along each limb, so that the distal part of the handle can be folded towards the deck to make the lawnmower more compact for storage or transport.

Another known lawnmower is of similar construction, but does not have wheels. Instead, an impeller is arranged within the deck to cause the lawnmower to hover above the ground.

A further known lawnmower utilises a horizontally-mounted cutting cylinder that has a plurality of blades on its periphery. Rotation of the cylinder brings the blades into close contact with a fixed bottom blade resulting in a shearing effect that is used to cut grass. This type of machine is usually supported on wheels or rollers.

Each of these known types of lawnmower may be stored in its normal orientation on the floor of, for example a shed or garage, or it may be hung up by the handle so as to save on floor space. In either case, however, storage is a problem for people having limited storage space, as is often the case in garages and sheds.

EP-A-1 543 711 describes a lawnmower having a grass-box suitable for storage.

The aim of the invention is to provide a lawnmower that can be stored, when not in use, in a more compact configuration.

The present invention provides a lawnmower having a body housing a cutter for cutting grass, and a grass-box, one end of which is detachably mountable to one end of the body for collecting grass cut by the cutter, the grass-box being open at said one end, **characterised in that** the grass-box is shaped so as to be slidable over the other end of the body, whereby the lawnmower can be stored with said other end body portion housed within the grass-box.

In a preferred embodiment, the lawnmower further comprises a handle means pivotally attached to the body and extending, when the lawnmower is in use, over the mounted grass-box, the handle means being such as to be pivotable into a position overlying and adjacent to the body.

Advantageously, the handle means is such that, when pivoted to overlie the body, it does not extend substantially beyond the footprint of the body. Preferably, the handle means is constituted by two pivotally-connected handle members. Conveniently, the arrangement is such that, when the handle means is pivoted to overlie the body, and the lawnmower is stored with said other end body portion housed within the grass-box, the handle means and said other end body portion sandwich a portion of the grass-box.

Preferably, at least one of the walls of the grass-box is vented to permit the passage of air therethrough.

The lawnmower may further comprise respective pairs of wheels at opposite ends of the body, and wherein the grass-box is shaped to accommodate one of said pair of wheels.

The invention will now be described in greater detail, by way of example, with reference to the drawings, in which: -
Figure 1 shows a first form of lawnmower constructed in accordance with the invention, the lawnmower being shown in the in-use position;
Figures 2 to 5 show the various stages of reconfiguring the lawnmower of Figure 1 for storage;
Figures 6 and 7 show the lawnmower in two alternative storage configurations;
Figure 8 is a perspective view of a second form of lawnmower constructed in accordance with the invention, the lawnmower being shown in the in-use position;

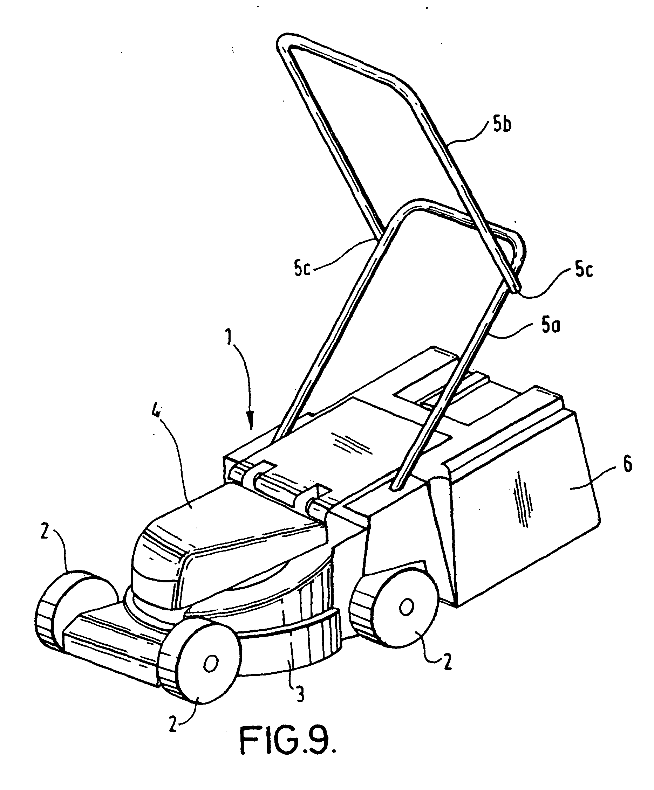

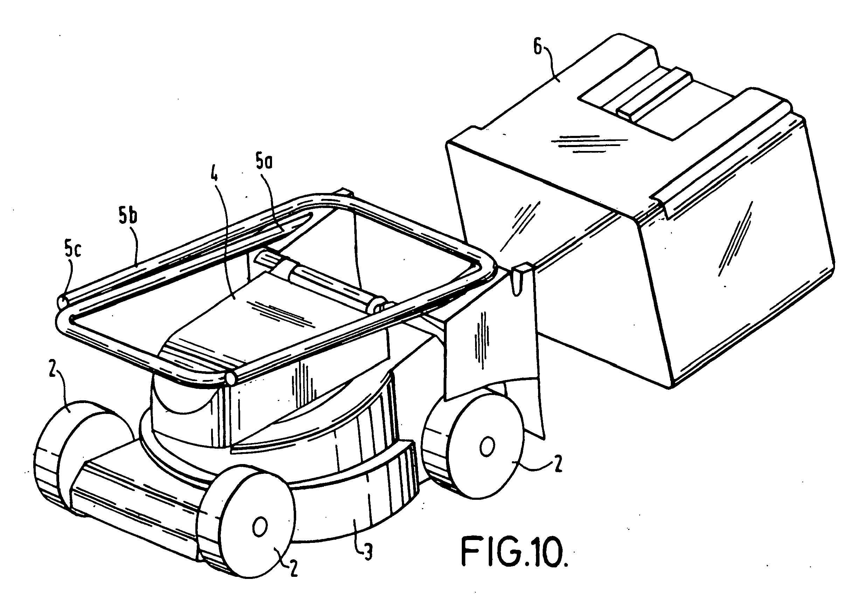

Figures 9 to 12 show the various stages of reconfigurating the lawnmower of Figure 8 for storage; and
Figures 13 and 14 show two alternative storage positions for the lawnmower of Figure 8.

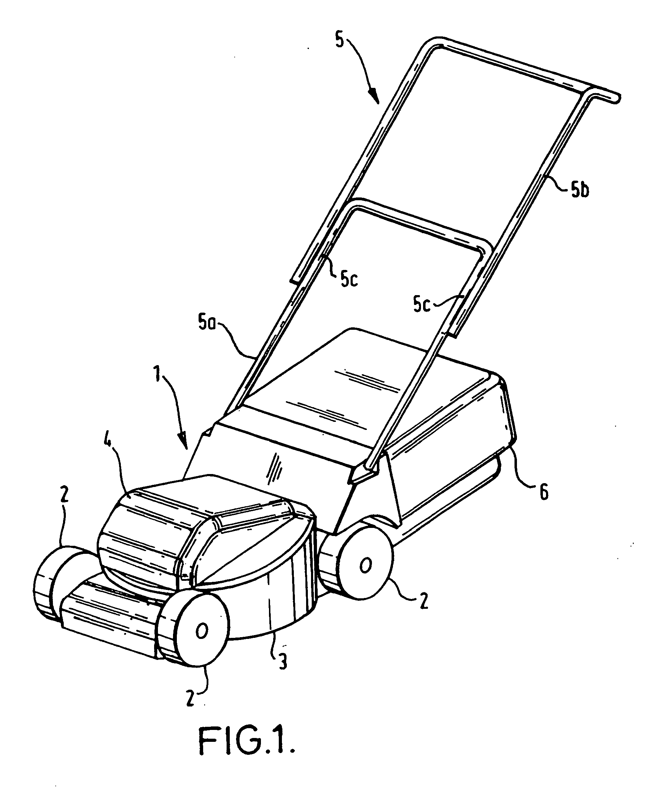

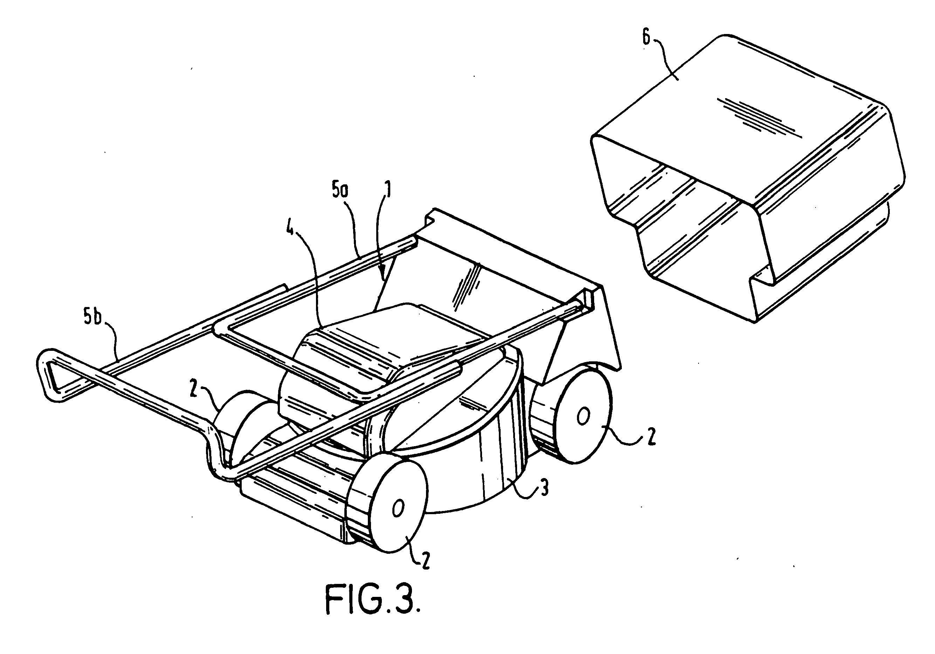

Referring to the drawings, Figure 1 shows a wheeled rotary lawnmower having a body 1 supported at the front and rear by wheels 2. The body 1 includes a deck 3 defining a cutting chamber (not shown) open to ground datum, the cutting chamber housing a cutting blade (not shown) which is rotatable about a substantially vertical axis. The cutting blade is driven by a motor (not shown) housed within a motor housing 4 forming part of the body 1. A U-shaped handle, indicated generally by the reference numeral 5, is pivotally attached to the rear of the body 1. The handle 5 is constituted by two U-shaped handle members 5a and 5b, the free ends of the limbs of the handle member 5a being pivotally attached to the rear of the body 1, and the free ends of the handle member 5b being pivotally attached to the upper end of the handle member 5a about pivot points 5c. Locking members (not shown) are provided for locking the two handle members 5a and 5b together in the position shown in Figure 1. A grass-box 6 is detachably mounted to the rear of the body 1 of the lawnmower, the front end of the grass box being open (see Figures 3 to 5) for entry of cut grass from the cutting chamber via an exit aperture (not shown) provided at the rear of the cutting chamber.

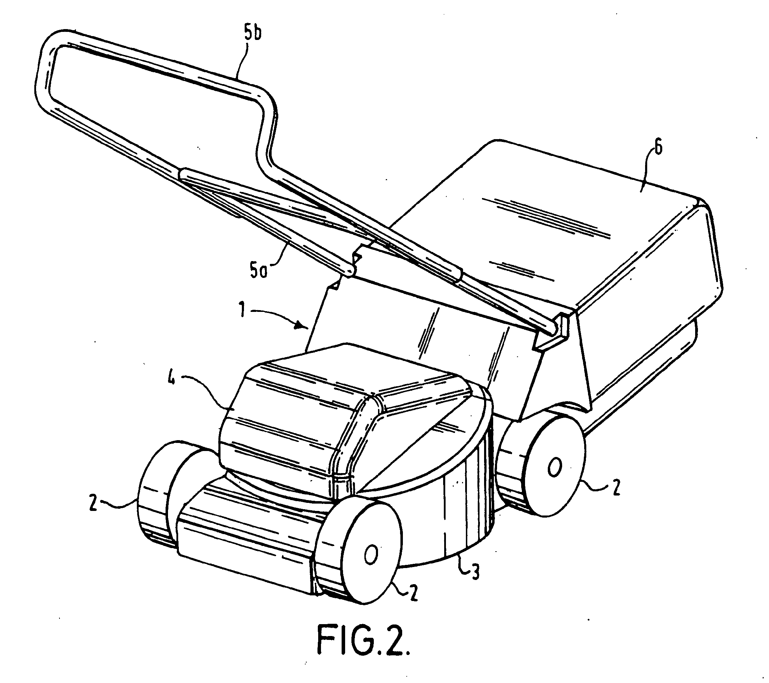

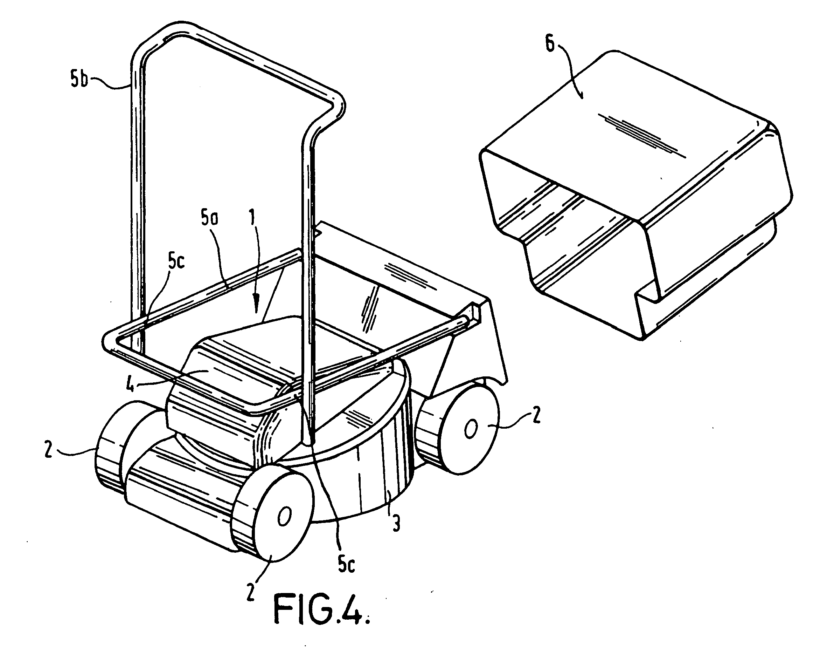

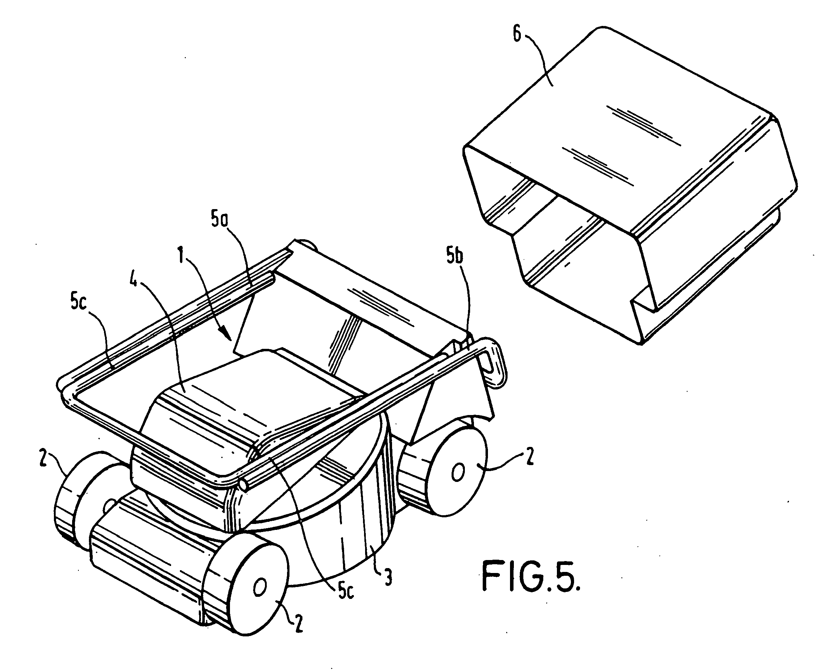

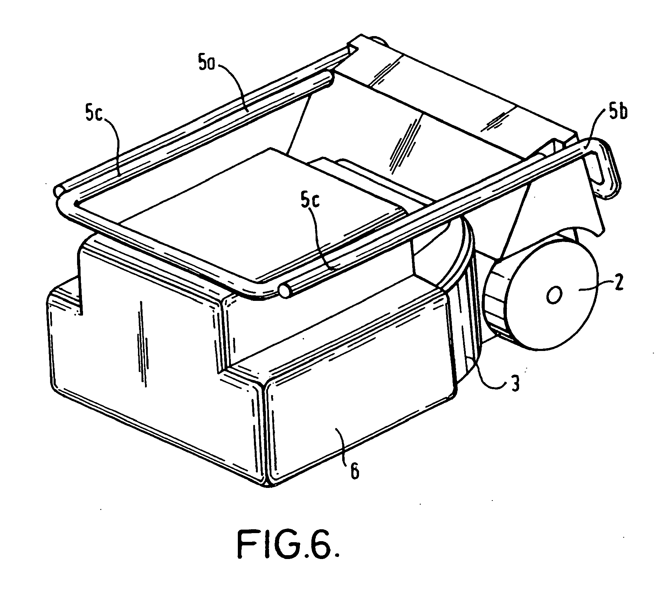

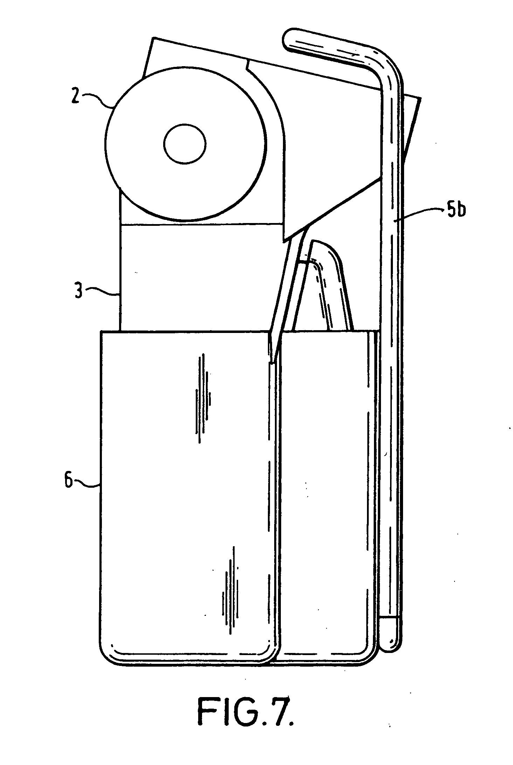

In order to store this lawnmower in a more compact configuration, the following steps are carried out after the grass-box 6 has been emptied. Firstly, the entire handle 5 is pivoted forwardly with respect to the body 1 of the lawnmower, as shown in Figure 2. The handle 5 is then pivoted further forwards, and the grass-box 6 is removed, as shown in Figure 3. The handle locking members are then removed, and the handle member 5b is be pivoted upwardly with respect to the handle member 5a, as shown in Figure 4. The handle member 5b is then pivoted further, so as to lie substantially parallel to the handle member 5a, as shown in Figure 5. The lawnmower can then be stored in one of two configurations, in the first of which (see Figure 6) the grass-box 6 is slid over the front portion of the body 1 from the front thereof, so that the top of the grass-box lies beneath the folded-over handle 5. In this position, the lawnmower can be stored, on its base and rear wheels, on the floor of a shed or a garage. The alternative storage configuration, shown in Figure 7, merely stands the stacked lawnmower on the base of the grass-box 6. In other respects the storage configuration being the same. In this case, the lawnmower can be stored on the floor of a shed or garage, so as to occupy a smaller area of the floor. Alternatively, the lawnmower could be hung from a hook (or other support means) fixed to a wall of a shed or a garage.

In either storage configuration, it will be appreciated that storage is possible because the cross-section of the grass-box is chosen to accommodate that of the front portion of the body 1 of the lawnmower.

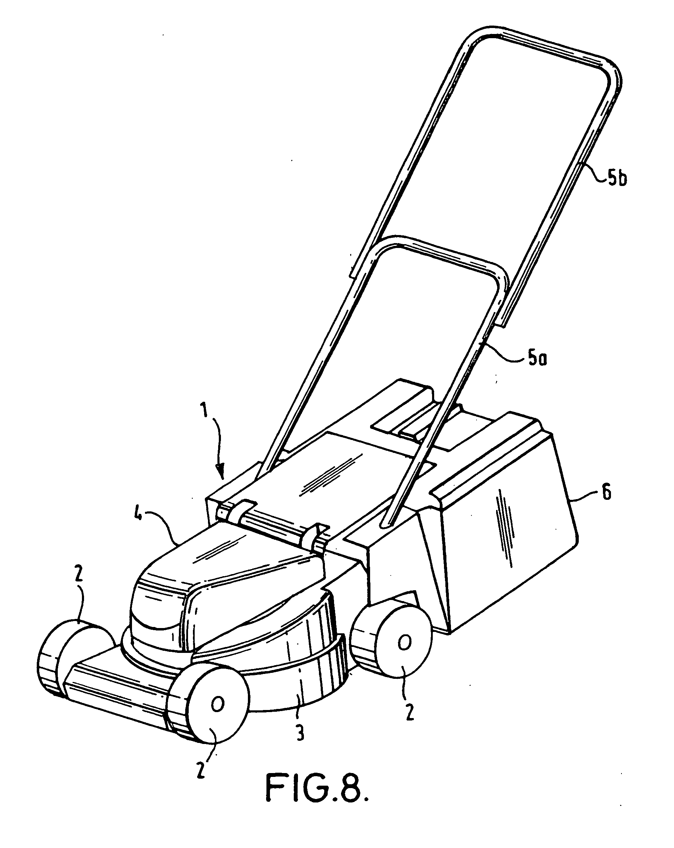

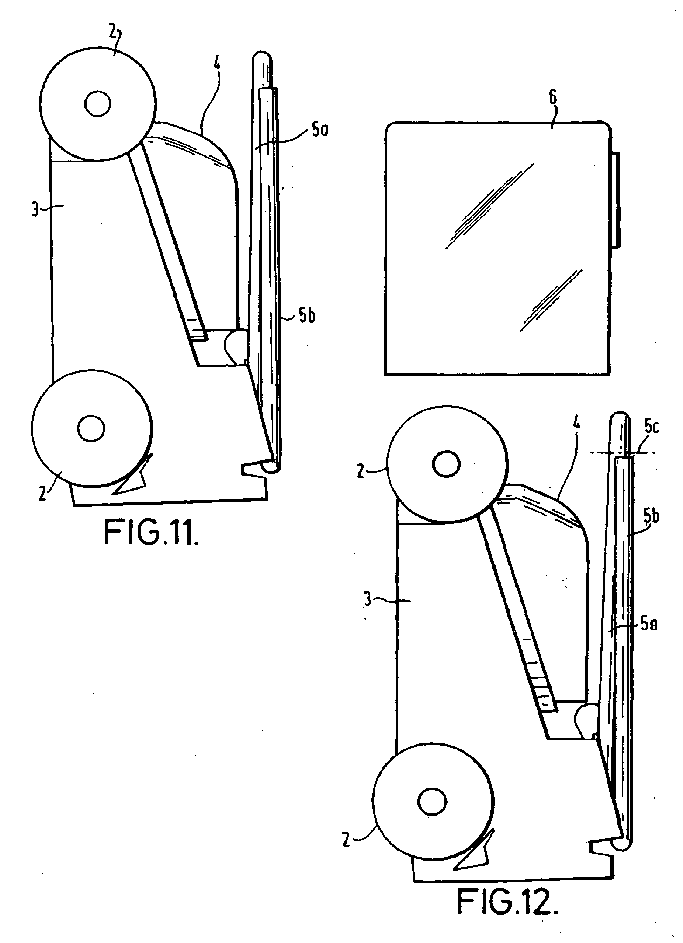

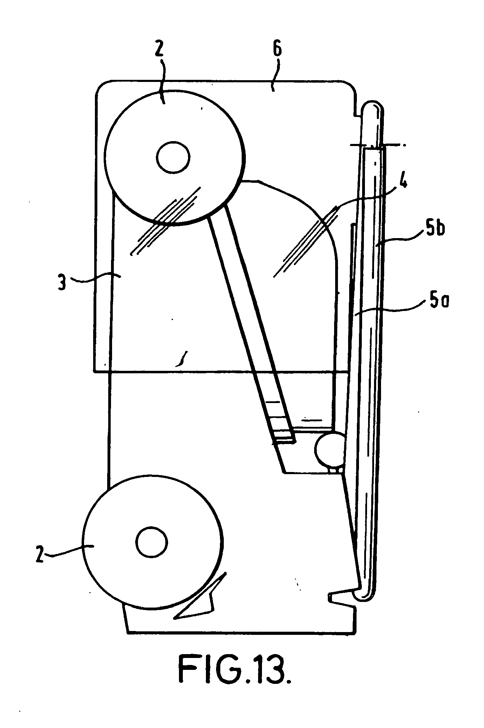

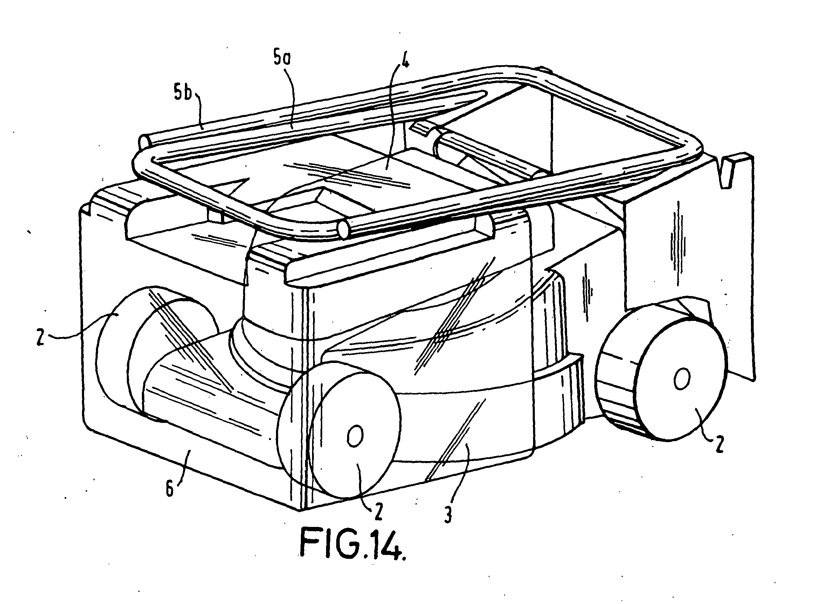

Figure 8 shows a modified form of lawnmower constructed in accordance with the invention. This lawnmower is very similar to that shown in Figure 1, and like reference numerals are used for like parts. As the differences between the two forms of lawnmower are merely variations in the shape and configuration of the various parts thereof, the lawnmower of Figure 8 will not be described in detail. Moreover, the various steps for re-configuring the lawnmower of Figure 8 for storage are basically the same as that for the lawnmower of Figure 1. The only difference in the storage process for the lawnmower of Figure 8 being that, after the handle 5 has been fully folded over (see Figure 11), the lawnmower is placed upright on a substantially horizontal surface such as the floor of a shed or garage, with the rear of the body 1 in contact with that surface. The grass-box 6 is then slid down over the front end of the body 1 of the lawnmower (see Figures 12 and 13). The lawnmower can then be stored in the configuration shown in Figure 13. Alternatively, it can be stored in the position shown in Figure 14 with the lawnmower in a generally horizontal configuration.

It will be apparent that each of the lawnmowers described above can be stored in a more compact manner than prior art lawnmowers, owing to the complementary configurations of the grass-box 6 and the front portion of the body 1 of each of the lawnmowers. Moreover, each of the lawnmowers can be stored upright, on either its rear end or its front end in a stable position. Each can also be stored in the conventional horizontal position, but with the handle folded out of the way.

An additional advantage of each of the lawnmowers described above is that configuring the grass-box 6 to accommodate the front of the lawnmower results in a larger grass-box, which ensures increased grass-box capacity.

It should be noted that each grass-box 6 will be vented, by providing apertures in one or more of its walls, to permit air to escape. Consequently, when each of the lawnmowers is stored, its cutting chamber will not be sealed totally, thereby ensuring air circulation which prevents cut grass within the cutting chamber composting and leading to smell problems.

It will also be apparent that the invention is applicable to any type of lawnmower. In particular, the invention is applicable to a non-wheeled lawnmower such as a hover mower or to a lawnmower utilising a horizontally-mounted cutting cylinder provided with blades on its periphery. The invention is also applicable to a lawnmower whose cutter is driven as a result of the user pushing the lawnmower rather than by a motor.

## Claims

1. A lawnmower having a body (1) housing a cutter for cutting grass, and a grass-box (6), one end of which is detachably mountable to one end of the body for collecting grass cut by the cutter, the grass-box being open at said one end, **characterised in that** the grass-box is shaped so as to be slidable over the other end of the body, whereby the lawnmower can be stored with said other end body portion housed within the grass-box.

2. A lawnmower as claimed in claim 1, further comprising handle means (5) pivotally attached to the body (1) and extending, when the lawnmower is in use, over the mounted grass-box (6), the handle means being such as to be pivotable into a position overlying and adjacent to the body.

3. A lawnmower as claimed in claim 2, wherein the handle means (5) is such that, when pivoted to overlie the body (1), it does not extend substantially beyond the footprint of the body.

4. A lawnmower as claimed in claim 2 or claim 3, wherein the handle means (5) is constituted by two pivotally-connected handle members (5a, 5b).

5. A lawnmower as claimed in any one of claims 2 to 4, wherein the arrangement is such that, when the handle means (5) is pivoted to overlie the body (1), and the lawnmower is stored with said other end body portion housed within the grass-box (6), the handle means and said other end body portion sandwich a portion of the grass-box.

6. A lawnmower as claimed in any one of claims 1 to 5, wherein at least one of the walls of the grass-box (6) is vented to permit the passage of air therethrough.

7. A lawnmower as claimed in any one of claims 1 to 6, further comprising respective pairs of wheels (2) at opposite ends of the body (1), and wherein the grass-box (6) is shaped to accommodate one of said pair of wheels.

## Patentansprüche

1. Rasenmäher mit einem Körper (1), in dem eine Schneidvorrichtung zum Schneiden von Gras untergebracht ist, und einem Fangkorb (6), dessen eines Ende lösbar an einem Ende des Körpers montiert werden kann, um von der Schneidvorrichtung geschnittenes Gras zu sammeln, wobei der Fangkorb an diesem einen Ende offen ist, **dadurch gekennzeichnet, dass** der Fangkorb eine solche Form hat, dass er über das andere Ende des Körpers geschoben werden kann, wodurch der Rasenmäher mit dem anderen Ende des Körperabschnitts im Fangkorb untergebracht gelagert werden kann

2. Rasenmäher nach Anspruch 1, ferner mit einem Griffmittel (5), das schwenkbar am Körper (1) angebracht ist und sich über den montierten Fangkorb (6) erstreckt, wenn der Rasenmäher in Betrieb ist, wobei das Griffmittel derart ist, dass es in eine Position geschwenkt werden kann, in der es über und neben dem Körper liegt.

3. Rasenmäher nach Anspruch 2, wobei das Griffmittel (5) derart ist, dass es sich nicht wesentlich über die Grundfläche des Körpers hinaus erstreckt, wenn es in eine Position geschwenkt wird, in der es über dem Körper (1) liegt.

4. Rasenmäher nach Anspruch 2 oder 3, wobei das Griffmittel (5) aus zwei schwenkbar verbundenen Griffelementen (5a, 5b) besteht.

5. Rasenmäher nach einem der Ansprüche 2 bis 4, wobei die Anordnung derart ist, dass ein Abschnitt des Fangkorbs zwischen dem Griffmittel und dem anderen Ende des Körperabschnitts liegt, wenn das Griffmittel (5) so geschwenkt wird, dass es über dem Körper (1) liegt, und der Rasenmäher mit dem anderen Ende des Körperabschnitts im Fangkorb (6) untergebracht gelagert ist.

6. Rasenmäher nach einem der Ansprüche 1 bis 5, wobei mindestens eine der Wände des Fangkorbs (6) belüftet ist, damit Luft hindurchgehen kann.

7. Rasenmäher nach einem der Ansprüche 1 bis 6, ferner mit jeweiligen Radpaaren (2) an gegenüberliegenden Enden des Körpers (1), wobei der Fangkorb (6) eine solche Form hat, dass eines der Radpaare untergebracht werden kann.

## Revendications

1. Tondeuse à gazon ayant un corps (1) recevant une lame de coupe pour couper l'herbe, et un panier à herbe (6), dont une extrémité peut être montée de manière détachable à une extrémité du corps pour recueillir l'herbe coupée par la lame de coupe, le panier à herbe étant ouvert à ladite une extrémité, **caractérisée en ce que** le panier à herbe est formé de manière à pouvoir coulisser par-dessus l'autre extrémité du corps, la tondeuse à gazon pouvant ainsi être rangée avec l'autre extrémité de la portion de corps logée dans le panier à herbe.

2. Tondeuse à gazon selon la revendication 1, comprenant en outre un moyen de poignée (5) attaché de manière pivotante au corps (1) et s'étendant, lors de l'utilisation de la tondeuse à gazon, par-dessus le panier à herbe monté (6), le moyen de poignée étant en mesure de pivoter jusqu'à une position par-dessus le corps et adjacente à celui-ci.

3. Tondeuse à gazon selon la revendication 2, dans laquelle le moyen de poignée (5) est tel que lorsqu'il est pivoté pour recouvrir le corps (1), il ne s'étend pas substantiellement au-delà du contour du corps.

4. Tondeuse à gazon selon la revendication 2 ou la revendication 3, dans laquelle le moyen de poignée (5) est constitué par deux organes de poignée (5a, 5b) connectés de manière pivotante.

5. Tondeuse à gazon selon l'une quelconque des revendications 2 à 4, dans laquelle l'agencement est tel que lorsque le moyen de poignée (5) est pivoté pour recouvrir le corps (1), et que la tondeuse à gazon est rangée avec ladite autre extrémité de la portion de corps logée dans le panier à herbe (6), le moyen de poignée et ladite autre extrémité de la portion de corps prennent en sandwich une portion du panier à herbe.

6. Tondeuse à gazon selon l'une quelconque des revendications 1 à 5, dans laquelle au moins l'une des parois du panier à herbe (6) est ventilée de manière à permettre le passage d'air à travers elle.

7. Tondeuse à gazon selon l'une quelconque des revendications 1 à 6, comprenant en outre des paires de roues respectives (2) à des extrémités opposées du corps (1), et dans laquelle le panier à herbe (6) est formé de manière à recevoir l'une des dites paires de roues.
